# EUROPEAN PATENT SPECIFICATION

(11) **EP 2 627 881 B1**
(45) Date of publication and mention of the grant of the patent: **17.08.2016**
(21) Application number: 11832836.8
(22) Date of filing: 07.10.2011
(51) Int. Cl.: F01N 3/28, F01N 3/20, F01N 13/14, B01F 3/04, B01F 5/04

(54) **ARRANGEMENT FOR INTRODUCING A LIQUID MEDIUM INTO EXHAUST GASES FROM A COMBUSTION ENGINE**
ANORDNUNG ZUR EINSPEISUNG EINES FLÜSSIGEN MEDIUMS IN ABGASE AUS EINEM VERBRENNUNGSMOTOR
DISPOSITIF POUR INTRODUIRE UN MILIEU LIQUIDE DANS DES GAZ D'ÉCHAPPEMENT D'UN MOTEUR À COMBUSTION INTERNE

(30) Priority: 14.10.2010 SE 1051073
(43) Date of publication of application: 21.08.2013
(73) Proprietor: Scania CV AB (publ), 151 87 Södertälje (SE)
(72) Inventor: LOMAN, Peter, S-192 72 Sollentuna (SE); NORLING, Daniel, S-141 46 Huddinge (SE)
(74) Representative: Scania CV AB
(86) International application number: PCT/SE2011/051200
(87) International publication number: WO 2012/050509

(56) References cited:
- EP-A1- 2 325 452
- EP-A2- 1 050 670
- WO-A1-2007/110575
- DE-A1-102008 048 796
- US-A1- 2006 008 397
- US-A1- 2008 120 019
- US-A1- 2010 212 301

## Description

### FIELD OF THE INVENTION, AND PRIOR ART

The present invention relates to an arrangement according to the preamble of claim 1 for introducing a liquid medium, e.g. urea, into exhaust gases from a combustion engine

To meet prevailing exhaust cleaning requirements, today's motor vehicles are usually provided with a catalyst in the exhaust line to effect catalytic conversion of environmentally hazardous constituents of the exhaust gases to environmentally less hazardous substances. A method which has been employed for achieving effective catalytic conversion is based on injecting a reducing agent into the exhaust gases upstream of the catalyst. A reductive substance which forms part of, or is formed by, the reducing agent is carried by the exhaust gases into the catalyst and is adsorbed on active seats in the catalyst, resulting in accumulation of the reductive substance in the catalyst. The accumulated reductive substance may then react with and thereby convert an exhaust substance to a substance with less environmental impact. Such a reduction catalyst may for example be of SCR (selective catalytic reduction) type. This type of catalyst is hereinafter called SCR catalyst. An SCR catalyst reduces NOₓ in the exhaust gases. In the case of an SCR catalyst, a reducing agent in the form of urea solution is usually injected into the exhaust gases upstream of the catalyst. The injection of urea into the exhaust gases results in the formation of ammonia which then serves as the reductive substance which assists the catalytic conversion in the SCR catalyst. The ammonia accumulates in the catalyst by being adsorbed on active seats in the catalyst, and NOₓ present in the exhaust gases is converted to nitrogen gas and water when it is brought into contact in the catalyst with accumulated ammonia on the active seats in the catalyst.

When urea is used as reducing agent, it is injected into the exhaust line in the form of a liquid urea solution via an injection means. The injection means comprises a nozzle via which the urea solution is injected under pressure into the injection means in the form of a finely divided spray. In many operating states of a diesel engine the exhaust gases will be at a high enough temperature to be able to vaporise the urea solution so that ammonia is formed. It is difficult, however, to avoid part of the urea solution supplied coming into contact with and becoming attached to the internal wall surface of the exhaust line in an unvaporised state. The exhaust line, which is often in contact with and cooled by surrounding air, will be at a lower temperature than the exhaust gases within the exhaust line. When a combustion engine is run in a uniform way for a period of time, i.e. during steady-state operating conditions, no appreciable variations in the exhaust flow occur and the urea solution injected into the exhaust gases will therefore reach substantially the same region of the exhaust line throughout said period of time. The relatively cool urea solution may cause local lowering of the temperature in that region of the exhaust line, which may lead to the formation in that region of a film of urea solution which is then entrained by the exhaust flow. When this film has moved a certain distance in the exhaust line, the water in the urea solution will boil away under the influence of the hot exhaust gases. Solid urea will remain and be slowly vaporised by the heat in the exhaust line. If the supply of solid urea is greater than the vaporisation, solid urea will accumulate in the exhaust line. If the resulting layer of urea becomes thick enough, the urea and its decomposition products will react with one another to form urea-based primitive polymers known as urea lumps. Such urea lumps may over time block an exhaust line.

It is therefore desirable that the injected urea solution be spread well out in the exhaust gases so that it is prevented from reaching substantially the same region of the exhaust line. A good spread of the urea solution in the exhaust gases also facilitates its vaporisation.

For reasons of space it is not usually possible to have a rectilinear exhaust line between a combustion engine and an exhaust outlet of a motor vehicle. Before the exhaust gases reach the mixing duct in which injected urea solution is mixed with them and becomes vaporised, they therefore usually pass through one or more pipe bends. Their passage through a pipe bend results in an oblique distribution of the exhaust flow as seen in the plane perpendicular to the direction of flow. Bringing an injected spray of urea solution into contact with such an obliquely distributed exhaust flow hinders the spreading of the urea solution in the exhaust gases and at the same time increases the risk that the urea solution might reach substantially the same wall region in the mixing duct.

The document EP 2325452 A1 (published 2011-05-25) shows a metering device placed upstream of a hydrolysis catalyst in an exhaust gas line for supplying an aqueous urea solution. A selective catalytic reduction (SCR) catalyst is provided in the downstream of the decomposition catalyst. An inlet section feed the exhaust gas into a housing portion. The exhaust gas is guided in counter flow through a front inlet opening of an inlet pipe. The reductant is fed into a flow deflection area of exhaust gas flow in the opening.

### OBJECT OF THE INJECTION

The object of the present invention is to propose a solution to the above problem of obliquely distributed exhaust flow in a mixing duct in which liquid medium, e.g. urea, is injected into exhaust gases from a combustion engine.

### SUMMARY OF THE INVENTION

According to the present invention, said object is achieved by means of an arrangement which presents the features defined in claim 1.

The first and second duct sections of the inlet duct form a rotationally symmetrical labyrinth which the exhaust gases pass through before they are released into the mixing duct. When the exhaust gases pass through these duct sections of the inlet duct, oblique distributions of the exhaust flow take time to become equalised so that the exhaust gases can be led into the mixing duct in a flow which is substantially uniformly distributed as seen in a cross-section through the mixing duct. This makes it possible to achieve an exhaust flow which is substantially evenly distributed round the spray of liquid medium injected in the mixing duct, resulting in good spreading of the liquid medium in the exhaust gases while at the same time preventing the medium from reaching the wall surfaces of the mixing duct in the region nearest to the injection means. The result is that the small drops of liquid medium are spread out well in the exhaust gases in the mixing duct before they have occasion to reach any wall surface of the mixing duct, thereby eliminating or at least substantially reducing the risk of the previously mentioned lump formation. The fact that said duct sections of the inlet duct run externally about one another and externally about the mixing duct also makes it possible for the arrangement to have a compact and space-saving configuration.

According to an embodiment of the invention, the mixing duct is bounded in radial directions by a tubular wall, and said second duct section of the inlet duct extends along the outside of this tubular wall. The exhaust gases which flow through this second duct section of the inlet duct will deliver heat to this tubular wall, the inside of which serves as an internal wall surface of the mixing duct. This counteracts cooling of this internal wall surface of the mixing duct, thereby hindering injected medium from becoming attached to this internal wall surface before being vaporised.

Other advantageous features of the arrangement according to the invention are indicated by the dependent claims and the description set out below.

### BRIEF DESCRIPTION OF THE DRAWING

The invention is described below in more detail on the basis of embodiment examples with reference to the attached drawings, in which:
- Fig. 1: is a schematic longitudinal section through an arrangement according to an embodiment of the present invention, and
- Fig. 2: depicts a section along the line II-II in Fig. 1.

### DETAILED DESCRIPTION OF EMBODIMENTS OF THE INVENTION

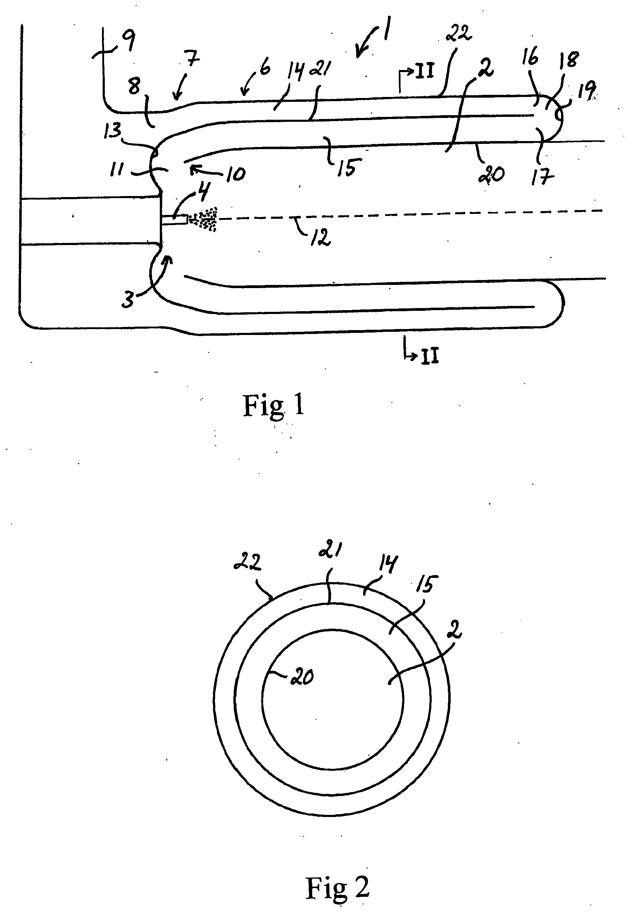

Fig. 1 illustrates an arrangement 1 according to the present invention for introducing a liquid medium into exhaust gases from a combustion engine. The arrangement may for example be situated in an exhaust line upstream of an SCR catalyst in order to introduce a liquid reducing agent in the form of urea or ammonia into the exhaust line upstream of the SCR catalyst, or be situated in an exhaust post-treatment device in order to introduce a liquid reducing agent in the form of urea or ammonia upstream of an SCR catalyst which forms part of the exhaust post-treatment device.

The arrangement 1 comprises a mixing duct 2 intended to receive at its upstream end 3 exhaust gases from a combustion engine and to lead them towards an exhaust post-treatment unit, e.g. in the form of an SCR catalyst. The mixing duct 2 is thus intended to have exhaust gases flowing through it.

The arrangement 1 further comprises an injection means 4 adapted to injecting the liquid medium under pressure in the form of a finely divided spray into the mixing duct 2 at the centre of the upstream end 3 of the mixing duct. The injection means 4 may for example comprise an injection nozzle. The injection means 4 is situated with advantage at the centre of the upstream end 3 of the mixing duct and is adapted to injecting the liquid medium towards the downstream end of the mixing duct, as illustrated in Fig. 1.

Exhaust gases are led into the mixing duct 2 via an inlet duct 6 which is situated upstream of the mixing duct, has at its upstream end 7 an annular inlet 8 for receiving exhaust gases from a line 9 and at its downstream end 10 an outlet 11 leading to the upstream end 3 of the mixing duct in order to deliver exhaust gases to the mixing duct. The outlet 11 of the inlet duct is annular and extends round the centreline 12 of the mixing duct. The outlet 11 of the inlet duct leads to an annular guide surface 13 which extends round the centreline 12 of the mixing duct. This guide surface 13 is rounded in order to cause the exhaust gases received from the inlet duct 6 to flow towards the downstream end of the mixing duct.

The inlet duct 6 comprises a first duct section 14 which is annular in cross-section and which has at its downstream end an annular outlet 16. The inlet duct 6 comprises also a second duct section 15 which is annular in cross-section, is situated downstream of the first duct section 14 and surrounds the mixing duct 2. The second duct section 15 is connected via its downstream end to the outlet 11 of the inlet duct and has at its upstream end an annular inlet 17. The first duct section 14 surrounds and is concentric with the second duct section 15. The duct sections 14, 15 are also concentric with the mixing duct 2.

The annular outlet 16 of the first duct section 14 is connected to the annular inlet 17 of the second duct section 15 via a flow reversal section 18 which forms part of the inlet duct and is adapted to reversing the direction of flow of the exhaust gases flowing through the inlet duct 6 so that they are caused to flow through the second duct section 15 in a direction which is opposite to that of the exhaust gases in the first duct section 14 and opposite to that of the exhaust gases in the mixing duct 2. The flow reversal section 18 has an annular guide surface 19 which is rounded to cause the exhaust gases received from the outlet 16 of the first duct section to flow towards the inlet 17 of the second duct section.

The mixing duct 2 is bounded radially by a tubular wall 20. The second duct section 15 of the inlet duct extends along the outside of the tubular wall 20. The first and second duct sections 14, 15 of the inlet duct are themselves demarcated from one another by a tubular dividing wall 21, and the first duct section 14 is bounded radially outwards by a tubular wall 22. In the embodiment illustrated, the guide surface 13 is a continuation of the dividing wall 21 and the guide surface 19 extends between the tubular walls 20, 22.

The spray of liquid medium injected into the mixing duct 2 via the injection means 4 comes into contact in the mixing duct with the exhaust gases which flow into the mixing duct 2 via the outlet 11 of the inlet duct in a substantially symmetrical flow round this spray. The exhaust gases flowing into the mixing duct 2 prevent the liquid medium in said spray from coming into contact with the wall of the mixing duct in the region nearest to the injection means 4 and carry the liquid medium with them downstream in the mixing duct 2. During its movement downstream in the mixing duct 2 the liquid medium spreads out in the exhaust gases and is vaporised by their heat.

The arrangement according to the invention is particularly intended for use in a heavy motor vehicle, e.g. a bus, a tractor vehicle or a truck.

## Claims

1. An arrangement for introducing a liquid medium, e.g. urea, into exhaust gases from a combustion engine, which arrangement (1) comprises
- a mixing duct (2) intended to have exhaust gases flowing through it,
- an injection means (4) for injecting the liquid medium into the mixing duct (2) at the centre of the upstream end (3) of the mixing duct, and
- an inlet duct (6) which is situated upstream of the mixing duct (2), has at its upstream end (7) an inlet (8) for receiving exhaust gases and at its downstream end (10) an outlet (11) to the upstream end (3) of the mixing duct (2) in order to deliver exhaust gases to the mixing duct, wherein
- in the inlet duct (6) comprises a first duct section (14) which is annular in cross-section and which has at its downstream end an annular outlet (16),
- the inlet duct (6) comprises a second duct section (15) which is annular in cross-section, is situated downstream of the first duct section (14) and surrounds the mixing duct (2), which second duct section (15) is connected via its downstream end to the outlet (11) of the inlet duct and has at its upstream end an annular inlet (17),
- said first duct section (14) surrounds said second duct section (15), and
- the inlet duct (6) further comprises a flow reversal section (18) via which the annular outlet (16) of the first duct section (14) is connected to the annular inlet (17) of the second duct section (15) and which is adapted to reversing the direction of flow of the exhaust gases flowing through the inlet duct (6) so that they are caused to flow through the second duct section (15) in a direction opposite to that of the exhaust gases in the first duct section (14),
**characterised in that** said flow reversal section (18) has an annular guide surface (19) which is rounded in its axial direction, to cause the exhaust gases received from the outlet (16) of the first duct section to flow towards the inlet (17) of the second duct section.

2. An arrangement according to claim 1, **characterised in that** the mixing duct (2) is bounded in radial directions by a tubular wall (20), and said second duct section (15) of the inlet duct extends along the outside of this tubular wall (20).

3. An arrangement according to claim 1 or 2, **characterised in that** said first and second duct sections (14, 15) of the inlet duct are demarcated from one another by a tubular separating wall (21).

4. An arrangement according to any one of claims 1-3, **characterised in that** the inlet (11) of the inlet duct is annular and extends round the centreline (12) of the mixing duct.

5. An arrangement according to claim 4, **characterised in that** the outlet (11) of the inlet duct leads to an annular guide surface (13) which extends round the centreline (12) of the mixing duct and is rounded to cause the exhaust gases received from the inlet duct (6) to flow towards the downstream end of the mixing duct.

6. An arrangement according to any one of claims 1-5, **characterised in that** the inlet (8) of the inlet duct is annular.

7. An arrangement according to any one of claims 1-6, **characterised in that** the injection means (4) is situated at the centre of the upstream end (3) of the mixing duct and is adapted to injecting the liquid medium towards the downstream end of the mixing duct.

8. An arrangement according to any one of claims 1-7, **characterised in that** the first duct section (14) and the second duct section (15) are concentric.

9. An arrangement according to any one of claims 1-8, **characterised in that** the second duct section (15) and the mixing duct (2) are concentric.

## Patentansprüche

1. Anordnung zum Einspeisen eines flüssigen Mediums, wie zum Beispiel Harnstoff, in die Abgase von einem Verbrennungsmotor, wobei die Anordnung (1) umfasst
- einen Mischkanal (2), der dazu vorgesehen ist, Abgase durch diesen strömen zu lassen,
- ein Einspritzmittel (4) zum Einspritzen des flüssigen Mediums in den Mischkanal (2) am Zentrum des stromaufwärtigen Endes (3) des Mischkanals, und
- einen Einlasskanal (6), der stromaufwärts des Mischkanals (2) angeordnet ist, an seinem stromaufwärtigen Ende (7) einen Einlass (8) zum Aufnehmen von Abgasen hat und an seinem stromabwärtigen Ende (10) einen Auslass (11) zu dem stromaufwärtigen Ende (3) des Mischkanals (2), um die Abgase dem Mischkanal zuzuführen, wobei
- der Einlasskanal (6) einen ersten Kanalabschnitt (14) umfasst, der im Querschnitt ringförmig ist und der an seinem stromabwärtigen Ende einen ringförmigen Auslass (16) hat,
- der Einlasskanal (6) einen zweiten Kanalabschnitt (15) umfasst, der im Querschnitt ringförmig ist, stromabwärts des ersten Kanalabschnitts (14) angeordnet ist und den Mischkanal (2) umgibt,
- wobei der zweite Kanalabschnitt (15) über sein stromabwärtiges Ende mit dem Auslass (11) des Einlasskanals verbunden ist und an seinem stromaufwärtigen Ende einen ringförmigen Einlass (17) aufweist,
- wobei der erste Kanalabschnitt (14) den zweiten Kanalabschnitt (15) umgibt und
- wobei der Einlasskanal (6) weiter einen Strömungsumkehrungsabschnitt (18) umfasst, über den der ringförmige Auslass (16) des ersten Kanalabschnitts (14) mit dem ringförmigen Einlass (17) des zweiten Kanalabschnitts (15) verbunden ist und der dazu geeignet ist, die Strömungsrichtung der Abgase, die durch den Einlasskanal (6) strömen, so umzukehren, dass sie dazu veranlasst werden, durch den zweiten Kanalabschnitt (15) in entgegengesetzter Richtung zu strömen als die Abgase in dem ersten Kanalabschnitt (14),
**dadurch gekennzeichnet, dass** der Strömungsumkehrungsabschnitt (18) eine ringförmige Führungsoberfläche (19) aufweist, die in seiner axialen Richtung gerundet ist, um die von dem Auslass (16) des ersten Kanalabschnitts aufgenommenen Abgase zu veranlassen, in Richtung des Einlasses (17) des zweiten Kanalabschnitts zu strömen.

2. Anordnung nach Anspruch 1, **dadurch gekennzeichnet, dass** der Mischkanal (2) in Radialrichtungen durch eine röhrenförmige Wand (20) begrenzt ist, und der zweite Kanalabschnitt (15) des Einlasskanals sich entlang der Außenseite der röhrenförmigen Wand (20) erstreckt.

3. Anordnung nach Anspruch 1 oder 2, **dadurch gekennzeichnet, dass** die ersten und zweiten Kanalabschnitte (14, 15) des Einlasskanals durch eine röhrenförmige Trennwand (21) voneinander abgegrenzt sind.

4. Anordnung nach einem der Ansprüche 1 bis 3, **dadurch gekennzeichnet, dass** der Einlass (11) des Einlasskanals ringförmig ist und sich um die Mittellinie (12) des Mischkanals herum erstreckt.

5. Anordnung nach Anspruch 4, **dadurch gekennzeichnet, dass** der Auslass (11) des Einlasskanals zu einer ringförmigen Führungsoberfläche (13) führt, die sich um die Mittellinie (12) des Mischkanals herum erstreckt und gerundet ist, um die von dem Einlasskanal (6) aufgenommene Abgase zu veranlassen in Richtung des stromabwärtigen Ende des Mischkanals zu strömen.

6. Anordnung nach einem der Ansprüche 1 bis 5, **dadurch gekennzeichnet, dass** der Einlass (8) des Einlasskanals ringförmig ist.

7. Anordnung nach einem der Ansprüche 1 bis 6, **dadurch gekennzeichnet, dass** das Einspritzmittel (4) im Zentrum des stromaufwärtigen Endes (3) des Mischkanals angeordnet ist, und dazu geeignet ist, das flüssige Medium in Richtung des stromabwärtigen Endes des Mischkanals einzuspritzen.

8. Anordnung nach einem der Ansprüche 1 bis 7, **dadurch gekennzeichnet, dass** der erste Kanalabschnitt (14) und der zweite Kanalabschnitt (15) konzentrisch sind.

9. Anordnung nach einem der Ansprüche 1 bis 8, **dadurch gekennzeichnet, dass** der zweite Kanalabschnitt (15) und der Mischkanal (2) konzentrisch sind.

## Revendications

1. Dispositif pour introduire un milieu liquide, par exemple de l'urée, dans les gaz d'échappement d'un moteur à combustion, lequel dispositif (1) comprend
- un conduit de mélange (2) destiné à être traversé par un écoulement de gaz d'échappement,
- un moyen d'injection (4) pour injecter le milieu liquide dans le conduit de mélange (2) au centre de l'extrémité amont (3) du conduit de mélange, et
- un conduit d'admission (6) qui est situé en amont du conduit de mélange (2), dont l'extrémité amont (7) présente une entrée (8) destinée à recevoir les gaz d'échappement et dont l'extrémité aval (10) présente une sortie (11) vers l'extrémité amont (3) du conduit de mélange (2) afin de délivrer les gaz d'échappement au conduit de mélange, où
- le conduit d'admission (6) comprend une première section de conduit (14) de section transversale annulaire qui présente une sortie annulaire (16) à son extrémité aval,
- le conduit d'admission (6) comprend une seconde section de conduit (15) de section transversale annulaire, située en aval de la première section de conduit (14) et entourant le conduit de mélange (2), ladite seconde section de conduit (15) étant reliée, via son extrémité aval, à la sortie (11) du conduit d'admission et présentant une entrée annulaire à son extrémité amont,
- ladite première section de conduit (14) entoure ladite seconde section de conduit (15), et
- le conduit d'admission (6) comprend en outre une section d'inversion d'écoulement (18) par l'intermédiaire de laquelle la sortie annulaire (16) de la première section de conduit (14) est reliée à l'entrée annulaire (17) de la seconde section de conduit (15) et qui est conçue pour inverser la direction d'écoulement des gaz d'échappement traversant le conduit d'admission (6), de sorte que ceux-ci sont amenés à s'écouler à travers la seconde section de conduit (15) dans une direction opposée à celle des gaz d'échappement dans la première section de conduit (14),
**caractérisé en ce que** ladite section d'inversion d'écoulement (18) présente une surface de guidage annulaire (19) qui est arrondie dans sa direction axiale pour amener les gaz d'échappement reçus de la sortie (16) de la première section de conduit à s'écouler en direction de l'entrée (17) de la seconde section de conduit.

2. Dispositif selon la revendication 1, **caractérisé en ce que** le conduit de mélange (2) est délimité dans les directions radiales par une paroi tubulaire (20), et **en ce que** ladite seconde section de conduit (15) du conduit d'admission s'étend le long de l'extérieur de cette paroi tubulaire (20).

3. Dispositif selon la revendication 1 ou 2, **caractérisé en ce que** lesdites première et seconde sections (14, 15) du conduit d'admission sont délimitées l'une par rapport à l'autre par une paroi de séparation tubulaire (21).

4. Dispositif selon l'une quelconque des revendications 1 à 3, **caractérisé en ce que** l'entrée (11) du conduit d'admission est annulaire et s'étend autour de l'axe (12) du conduit de mélange.

5. Dispositif selon la revendication 4, **caractérisé en ce que** la sortie (11) du conduit d'admission conduit à une surface de guidage annulaire (13) qui s'étend autour de l'axe (12) du conduit de mélange et est arrondie pour amener les gaz d'échappement reçus du conduit d'admission (6) à s'écouler vers l'extrémité aval du conduit de mélange.

6. Dispositif selon l'une quelconque des revendications 1 à 5, **caractérisé en ce que** l'entrée (8) du conduit d'admission est annulaire.

7. Dispositif selon l'une quelconque des revendications 1 à 6, **caractérisé en ce que** le moyen d'injection (4) est situé au centre de l'extrémité amont (3) du conduit de mélange et conçu pour injecter le milieu liquide vers l'extrémité aval du conduit de mélange.

8. Dispositif selon l'une quelconque des revendications 1 à 7, **caractérisé en ce que** la première section de conduit (14) et la seconde section de conduit (15) sont concentriques.

9. Dispositif selon l'une quelconque des revendications 1 à 8, **caractérisé en ce que** la seconde section de conduit (15) et le conduit de mélange (2) sont concentriques.
